# EUROPEAN PATENT SPECIFICATION

(11) **EP 2 226 704 B1**
(45) Date of publication and mention of the grant of the patent: **16.05.2012**
(21) Application number: 09445007.9
(22) Date of filing: 02.03.2009
(51) Int. Cl.: G06F 3/033

(54) **A digital pen**
Digitaler Stift
Stylo numérique

(43) Date of publication of application: 08.09.2010
(73) Proprietor: Anoto AB, 227 22 Lund (SE)
(72) Inventor: Fermgârd, Björn, 222 29 Lund (SE); Hollström, Magnus, 222 20 Lund (SE); Ahman, Daniel, 232 36 Arlöv (SE); Josephson, Mikael, 243 93 Höör (SE)
(74) Representative: Perklev, Karin Cecilia

(56) References cited:
- WO-A-2005/057471
- US-A1- 2009 039 148

## Description

### Field of the Invention

The present invention relates to a digital pen comprising a casing, an ink cartridge with a writing tip for marking a surface; a camera system for capturing images of the surface in order to digitally record pen strokes formed on the surface, and a detachable cap to be placed at a writing end of the digital pen.

### Background Art

It is known to digitally record pen strokes formed on a surface by means of a digital pen which captures images of the surface while the pen strokes are formed. To enable the digital recording of the pen strokes the surface may be provided with a pattern which makes it possible to determine the position of the digital pen on the surface using the content of the captured images.

The assignee of the present application, Anoto AB, has developed a digital pen which operates on an absolute position-coding pattern. The pen comprises a casing, an ink cartridge with a writing tip, a camera system for capturing images of the position-coding pattern, a processor for decoding coordinates from the position-coding pattern represented in the images and a transmitter for transmitting coordinates to an external device.

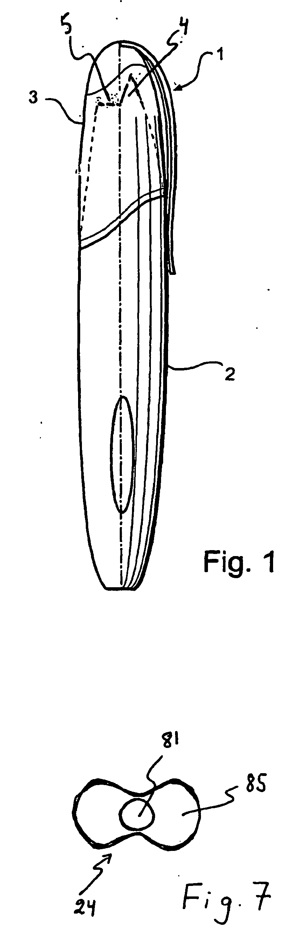

Fig. 1 schematically shows the design of such a digital pen. The pen 1 has a cap 3 which is placed on the pen casing 2 in order to protect the writing end thereof when the pen is not in use. As is shown with broken lines in Fig. 1, the writing end of the pen comprises a writing tip 4 and a window 5 through which the images are captured by the camera.

The pen may be turned on when the cap is removed from the casing and turned off when the cap is put back on the casing as further described in WO02/093467.

The present assignee has furthermore suggested to provide whiteboards with a position-coding pattern and to use a position-sensing device for recording pen strokes written on the whiteboard with a marker pen, see WO01/16872. The recorded pen strokes may be displayed on a computer screen in real time or stored for later review.

US 6,999,061 discloses an electronic whiteboard system which projects image data of a PC onto the screen of an electronic whiteboard by a projector. The electronic whiteboard comprises coordinate detection means for detecting the position of an electronic pen on the screen. The coordinate detection means uses the time difference between infrared rays and a supersonic wave simultaneously issued from an electronic pen and received by a coordinate detection sensor to calculate the distance between the electronic pen and the sensor.

Recently PolyVision Corporation has introduced an interactive whiteboard system on the market. The whiteboard system, which is sold under the trademark ENO, comprises a steelcase whiteboard provided with absolute position-coding pattern, The system further comprises traditional dry-erase marker pens which can be used for drawing on the whiteboard in the same manner as on an ordinary whiteboard, a non-making digital pen which can be used on the whiteboard without leaving any trace but which digitally records its position on the whiteboard by imaging the position-coding pattern, a computer, which receivers position data from the non-marking digital pen and a projector to which the computer can be connected in order to project image data shown on the display of the computer onto the whiteboard. The non-marking digital pen can be used as a virtual mouse on the whiteboard to control the computer and to draw pen strokes that are projected on the whiteboard. The digital pen used in the ENO system has been developed by Anoto AB and corresponds to the above-described digital pen except for that the ink cartridge has been replaced by a non-marking stylus. US 2009/039148 discloses a digital pen which has both an ink cartridge with a nib and a stylus with a stylus nib that are mounted side by side within a housing. Either the ink cartridge nib or the stylus nib can be brought forward through an open end of a metal end piece mounted at an end of the housing. The digital pen has three states of operation: 1) Stylus nib out; 2) Ink cartridge nib out; and 3) Neither ink cartridge nib out nor stylus nib out. The pen is operated between these three states of operation via a cam mechanism.

### Summary of the Invention

The invention relates to a digital pen according to claim 1.

This digital pen combines a marker pen and a non-marking pen (stylus) in one physical entity so that the user can use the same pen both in a marker mode to make permanent or non-permanent ink pen strokes on a surface and in a mom-marking mode to make non-ink pen strokes on a surface. The user just has to put on the cap in order to transform the digital pen from a marker pen to a non-marking pen and take off the cap in order to transform the digital pen from a non-marking pen to a marker pen. The user may for instance first write on a flip chart using the digital pen as a marker pen and then put on the cap and move to a whiteboard to highlight a feature in an image projected on to the whiteboard using the digital pen as a non-marking pen. Independently of whether the digital pen is used as a marker pen or a non-marking pen, all pen strokes made by the digital pen are digitally recorded so that they for instance can be displaced in real-time on a computer screen, projected onto a whiteboard, used for controlling a computer or stored for later use. This digital pen has a greater versatility than previous digital pens. It can be used on surfaces intended for permanent marking, for non-permanent marking and for no marking at all.

### Brief Description of the Drawings

Reference will now be made to exemplary embodiments of the invention as illustrated in the accompanying drawings, in which:
Fig. 1 schematically shows the design of a prior art digital pen.
Figs 2a and 2b schematically illustrate the use of a digital pen in a marker mode and a non-marking mode, respectively.
Fig. 3 schematically shows a system in which a combined marker and non-marking digital pen may be used.
Fig. 4 is an exploded view of an exemplary digital pen.
Fig. 5 is a view from above of the exemplary digital pen of Fig. 4 with a lid removed.
Fig. 6 is a schematical view of the ink cartridge and the cap of the exemplary digital pen of Fig. 4.
Fig. 7 is a schematical view of an alternative embodiment of a cap.

### Detailed Description of a Preferred Embodiment

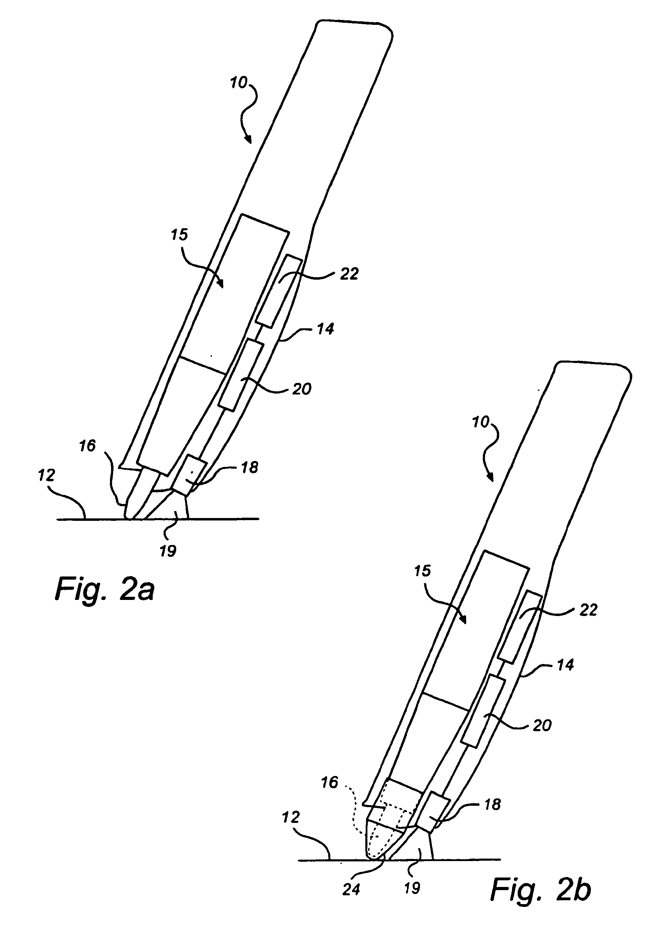

Figs 2a and 2b illustrate selective use of a digital pen as a marker pen or as a non-marking pen. Fig. 2a schematically shows a digital pen 10, which is used in a marker mode on a surface 12 provided with a position-coding pattern (not shown). The pen has a casing 14, which carries an ink cartridge 15 with a writing tip 16, a camera system 18 for imaging an area 19 close to the writing tip, a processing module 20, which controls the operation of the pen, and a communication module 22 for communicating position information to an external device (not shown). When the digital pen is moved over the surface with the writing tip in contact with the surface, the writing tip deposits ink and leaves a visible trace on the surface. At the same time, the camera system captures a sequence of images of the parts of the position-coding pattern close to the writing tip. The successive positions of the pen on the surface can be determined from the parts of the position-coding pattern represented in the images of the surface. In this way any ink pen stroke made on the surface can be digitally recorded.

Fig. 2b shows the same digital pen 10 as in Fig. 2a but used as a non-marking pen. The writing tip 16 is now covered by a cap 24 so that it can be used in a non-marking mode. The cap is designed so as to not obstruct the field of view of the camera system, thereby enabling the capture of images in the same area 19 close to the writing tip 16 with the cap 24 present on the writing tip of the pen. When the digital pen is moved over the surface with the cap in contact with the surface, no ink is dispensed and thus no visible trace is left on the surface. The successive positions of the pen on the surface can nevertheless be determined from the parts of the position-coding pattern represented in the images of the surface captured by the camera system during the movement of the digital pen. Thus, any non-ink pen stroke made on the surface can be digitally recorded.

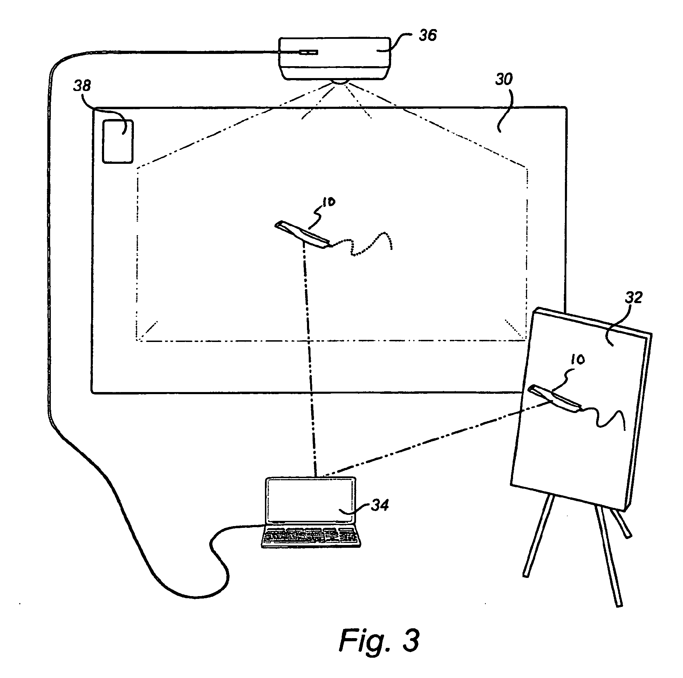

Fig. 3 schematically shows an example of a system in which the digital pen 10 of Figs 2a and 2b may be used. The exemplary system includes the following components: a whiteboard 30 or other type of writing board designed for non-permanent, erasable marking and provided with a position-coding pattern (not shown); a flip chart 32 or other writing surface designed for permanent marking and provided with a position-coding pattern (not shown); a computer 34, which may be connected to other computers or servers through a local or wide-area network and which may have a computer program installed which processes position indications received from the digital pen both in the marker mode and in the non-marking mode; a projector 36, connected to the computer for projecting still images and video onto the whiteboard, and a digital eraser 38 for erasing non-permanent pen strokes from the whiteboard and at the same time erasing corresponding digital pen strokes. To illustrate that the digital pen 10 can be used both as a marker pen and a non-marking pen, the pen is shown both on the whiteboard 30, where the dotted pen stroke illustrates a pen stroke made in the non-marking mode but digitally recorded and projected onto the whiteboard, and on the flip chart 32, where the solid pen stroke illustrates a pen stroke made in the marker mode and digitally recorded. The broken lines from the digital pen to the computer represent the transmission of position information to the computer.

A user may use the digital pen to write in a marker mode on the flip chart 32. The pen strokes made on the flip chart may be captured in digital form as a series of position indications and transferred from the pen to the computer 34. The digital representation of the pen strokes may be stored in the local computer 34 for real-time or later review or processing, or transferred to a remote computer. The user may move from the flip chart to the whiteboard 30 and continue to use the digital pen in the marker mode. In the same way as on the flip chart, the pen strokes may be captured in digital form using the position-coding pattern and transferred to the local computer. The user may then start a presentation on the local computer 34 and connect the local computer to the projector 36 in order to display the presentation on the whiteboard. In this situation the user may want to use the digital pen in a non-marking mode on the whiteboard to control the presentation on the local computer from the whiteboard and/or to draw on the whiteboard without leaving any visible trace on the whiteboard. To this end, the user may put on the cap 24 on the digital pen. When processing position indications recorded by the digital pen in the non-marking mode, the computer program may emulate a mouse with the left button pressed down. The digital pen may thus be used as a virtual mouse to control the presentation on the whiteboard in the same way as a mouse would be used to control the presentation on the computer screen. The digital pen may furthermore be used to draw on the whiteboard in the same way as a mouse is used to draw on a computer display, so that the invisible (non-ink) pen strokes made by the digital pen on the whiteboard may be recreated in the computer and projected by the projector on top of the presentation on the whiteboard.

The above-described system may for instance be used in a class room, a conference room or a lecture hall.

Returning to Fig. 2, the main components of the digital pen 10 will now be discussed more in detail. The casing 14, which may be elongate and generally pen-shaped, may comprise one or more parts that carry and enclose the other pen components. It may define one or more compartments for replaceable components such as the ink cartridge and a battery. Each of these compartments in the casing may be accessible via a fully or semi-detachable lid. The cartridge compartment may have an opening for the writing tip at one short end and the lid may form one wall of the compartment and the corresponding wall of the opening so that the ink cartridge may be inserted in and removed from the compartment with its longitudinal axis substantially parallel to the longitudinal axis of the cartridge compartment. The casing may also define one or more spaces for one or more PCBs (Printed Circuit Boards). The end of the pen that is provided with the writing tip is designated as the writing end and the other end as the non-writing end. At the writing end the casing may define a first opening, through which images are captured by the camera system, and a second opening through which the writing tip of the ink cartridge protrudes when the ink cartridge is loaded in the casing. The non-writing end of the pen may be designed in such a way that the cap can be retained thereon when removed from the writing end for use of the pen in the marker mode.

The camera system 18 of the digital pen may comprise an optics module and an optical image sensor. The optics module may comprise a light source, which may include e.g. a light-emitting diode (LED) or a laser diode, for illuminating a part of the surface within the field of view of the image sensor, by means of illuminating radiation, e.g. infrared light. The optics module may furthermore include a lens arrangement for projecting an image of the viewed area onto the image sensor and possibly one or more light guiding elements for guiding light from the light source to the surface and/or from the surface to the sensor. The image sensor may for instance be a two-dimensional CCD (Charge Coupled Device) or CMOS (Complementary Metal-Oxide Semiconductor) sensor which is triggered to capture images at a fixed or variable rate, typically of about 70-100 Hz. The camera system may also include a wavelength filter adapted to remove unwanted wavelengths. One embodiment of the digital pen may include two illuminating light sources that can be selectively or alternatively activated in order to reduce problems that may occur due to specular reflections. In another embodiment the camera system may include one or more polarizers to remove specularly reflected light.

In an exemplary digital pen the camera system 18 may be configured as disclosed in W02005/057471.

The processing module 20 of the digital pen may include one or more processors, a memory block and associated software. The processing module may be responsible for different functions in the pen, such as image processing, position decoding, exposure control, user feedback and power management, and may be implemented by a commercially available microprocessor such as a CPU ("Central Processing Unit"), by a DSP ("Digital Signal Processor") or by some other programmable logical device, such as an FPGA ("Field Programmable Gate Array") or alternatively an ASIC ("Application-Specific Integrated Circuit"), discrete analog and digital components, or some combination of the above. The processing module may comprise one or more sub-modules, which may be implemented on one or more hardware components. The memory block may comprise different types of memory, such as a working memory (e.g. a RAM) and a program code and persistent storage memory (a non-volatile memory, e.g. flash memory).

The communication module 22 may comprise a communications interface for transmitting or exposing data to a nearby or remote apparatus such as a computer, mobile telephone, PDA, network server, etc. The communication module may include components for wired or wireless short range communication (e.g. USB, RS232, radio transmission, infrared transmission, ultrasound transmission, inductive coupling, etc). The communication module may comprise one or more sub-modules, which may be implemented on one or more hardware components.

An exemplary digital pen may be configured as described in WO2008/002239. In such a digital pen, the image sensor of the camera system is integrated on an ASIC (Application Specific Integrated Circuit) which furthermore includes image processing logic that prepares the image data captured by the image sensor for decoding. This digital pen also has a standard Bluetooth communications circuit with spare processing capacity which is used for decoding coordinate data from the pre-processed image data received from the ASIC. In the exemplary pen, the ASIC may be placed on a first PCB which also carries the optical module and the Bluetooth communications circuit may be placed on a second PCB.

The digital pen may be configured to transmit recorded information more or less in real time to an external device or to store the information until triggered by the user to transmit the information. In one embodiment the functionality of the pen may be limited to capturing of images and transmission of image data to the external device. In another embodiment, the digital pen may decode position indications, e.g. x and y coordinates, from the images and transfer the position indications to the external device, optionally together with supplementary information like time stamps that indicate the point in time when each position indication was recorded, pen identification data that uniquely identify the pen by which the position indications were recorded, and/or force values that indicate the force with which the pen was pressed against the surface when the position indications were recorded. In yet another embodiment the pen may moreover perform certain operations in response to the decoded positions, such as determining a desired color or line width of subsequent pen strokes or setting the pen into a Bluetooth^{™} pairing mode.

The ink cartridge 15 comprises an ink supply and a writing tip 16 which allows the user to write or draw physically on a surface by ink being deposited thereon. The marking ink of the ink cartridge may be transparent to the illuminating radiation in order to avoid interference with the opto-electronic detection in the digital pen. The ink cartridge may be elongate. It may have a generally circular cross section over the major part of its length. The area of the cross section may be the same or vary along the length. The ink cartridge may include a shell, which encloses the ink, and a writing tip made from felt or another suitable material that is held by the shell and partly protrudes from an opening in the shell. The ink cartridge may be permanently incorporated in the digital pen or be replaceable. It may be designed to have a predetermined rotational position in the casing or it may be rotation insensitive. In the first case the ink cartridge may be provided with one or more guiding elements which are intended to cooperate with one or more corresponding guiding elements in the casing to control its rotational position in the casing. It may also be provided with one or more guiding elements which are intended to cooperate with one or more corresponding guiding elements of the cap 24 to control the rotational position of the cap in relation to the cartridge and thereby in relation to the casing.

The purpose of the cap 24 of the digital pen is to prevent ink from being deposited from the ink cartridge when the digital pen is not in use or when the digital pen is used in non-marking mode. In order to enable digital recording of pen strokes in a non-marking mode, the cap of the digital pen is designed to cover the writing tip but not to functionally obstruct the field of view of the camera system when the cap is placed at the writing end of the digital pen. By "not to functionally obstruct the field of view of the camera system" is here meant that the cap should allow the camera system to capture images that are useful for determining the pen's position so that pen strokes can be digitally recorded when the cap covers the writing tip. The cap may be configured to be fastened on either the cartridge or the casing or both of them. In one embodiment, the cap is fastened only on the cartridge and covers only the writing tip. It may be designed like a continuation of the cartridge shell with a closed front end, e.g. like in Fig. 2b. With such a design, interference with the field of view of the camera system can be avoided. However, there are safety regulations for preventing choking accidents which stipulate that a small detachable part should be designed so that it cannot pass through a hole having a diameter of 16 mm. In order to comply with such regulations and still not functionally obstruct the field of view of the camera system, the cap may be provided with a superstructure that enlarges the diameter of the cap outside the field of view of the camera system when the cap is placed at the writing end of the pen. The superstructure may for instance be asymmetric in a plane transverse to the longitudinal axis of the cap. In another embodiment the cap may be transparent to radiation used for capturing images of the surface close to the tip. In such a case the cap may extend into the field of view when present on the writing end of the pen without functionally obstructing the field of view of the camera system. In yet another embodiment the cap may have an opening the size of which is adapted to the field of view of the camera system so that the cap does not functionally obstruct the field of view of the camera system when placed at the writing end of the digital pen.

The cap may have one or more guiding elements which are intended to cooperate with one or more guiding elements on/in the casing or on the cartridge in order to control its rotational position in relation to the casing so that the cap does not functionally obstruct the field of view of the camera system when placed at the writing end of the pen. It may also be provided with retaining elements which are intended to cooperate with corresponding retaining elements on the cartridge or on the casing to retain the cap on the writing end of the pen when the pen is not in use or used in the non-marking mode.

Power supply for the pen may be provided by a battery, which may be rechargeable. In order to save battery time, the digital pen may include a power management module to control the power states of the pen. In an exemplary digital pen, the power management module may be configured as disclosed in WO2008/002239.

The digital pen may be provided with a pen-down detector to detect when the pen is applied to (pen down) and lifted from (pen up) the surface, and optionally to allow for determination of the application force. The pen-down detector, which may be a contact sensor or a proximity sensor, may be operatively connected to the ink cartridge. A pen stroke may be defined by a pen down and the subsequent pen up. Based on the output of the pen-down detector, the camera system may be controlled by the processing module to capture images between a pen down and a pen up. The pen-down detector may be optical, mechanical, resistive, inductive, capacitive or based on any other appropriate physical property. In an exemplary digital pen, the pen-down detector may be a force sensor as described in WO 03/069547 or JP2006-301979. The force sensors disclosed in these documents are designed for ball point type digital pens. The parameters of the force sensors may therefore have to be adapted for marker pen type digital pens.

The digital pen may be turned on in different ways. In one embodiment, the digital pen is provided with an on/off switch to be operated by a user in order to turn on/off the pen. In another embodiment, the pen has a sensor which automatically detects that a user grips the pen, e.g. a heat sensor or a pressure sensor. The output of the sensor triggers start-up activities in the pen, such as setting up of a communications link and loading of software into the working memory. In an exemplary digital pen, the pen-down detector may be used not only to trigger the capturing of images by the camera system, but also to turn on the pen. In this case, the user turns the pen on simply by starting to use it. When the pen-down is detected by the pen-down detector, the communication module starts a process to set up a communication link, e.g. a Bluetooth connection. In parallel, software is loaded into the working memory and starts to execute, and the camera system is triggered to start capturing images. If the digital pen is able to start determining its position before the communication link has been established, the pen may buffer some or all of the positions until the pen can start sending position information to an external unit. The concept of using a contact sensor both for turning on/off and for controlling start and stop of image capturing by a camera system may be used in different kinds of digital pens, not only the ones described herein, and also in digital erasers.

Independently of how the pen is turned on, it may have different power modes in order to save battery time. It may for instance have a high power mode, a medium power mode and a low power mode as disclosed in the above-mentioned WO2008/002239. Transition to a lower power mode may occur as a result of an inactivity time out. Transition to a higher power mode may occur as a result of pen-down detection. The pen may be automatically turned off when it has not been used for a predetermined time.

The pen may also include an MMI (Man Machine Interface) which may be selectively activated by the processing module for user feedback. The MMI may include one or more of a display, an indicator lamp, a vibrator, and a speaker.

Still further, the pen may include one or more buttons by means of which it can be activated and/or controlled.

The pen may be configured to operate on an absolute-position-coding pattern which encodes absolute positions on the surface. The positions encoded on the surface may or may not include an origin of the positions on the surface. Different surfaces may be provided with different kinds of position-coding pattern or with different parts of one and the same position coding pattern or even with the same part of one and the same position-coding pattern. In the latter case the user may have to indicate change of surface and identity of the new surface. The digital pen may have information stored which enables the pen to discriminate between the different kinds of surfaces. It may also store a database which associates different parts of the position-coding pattern, or the positions corresponding to these different parts of the position-coding pattern, with different parameters or instructions. Specific parts of the position-coding pattern may for instance be used as control areas to control the operation of the pen or as qualification areas to qualify pen strokes. At least one part of the position-coding pattern may be associated with an instruction to the pen to enter a pairing mode where it is discoverable by another device, e.g. a Bluetooth device. If the user wants to pair the digital pen to another device, he puts the digital pen in an area of the surface provided with the pairing mode part of the position-coding pattern. Using the database, the digital pen will interpret the position(s) decoded from this part of the position-coding pattern as an instruction to enter a pairing mode. At least one other part of the position-coding pattern may be associated with a parameter which indicates to the system that the pen will now be used in a marker mode/non-marking mode. If the user wants to indicate to the system that the pen is now used in the marker mode/non-marking mode, he places the digital pen in an area of the surface provided with the relevant part of the position-coding pattern. The digital pen may then send a parameter associated with this part of the position-coding pattern to an external device, e.g. the computer in Fig. 3, which may use the information to control the system to operate in a suitable manner. Yet other parts of the position-coding pattern may be associated with different parameters for qualifying the pen strokes. In the non-marking mode, the user may want to indicate to the system e.g. the color and/or the line width of the pen strokes to be projected on the whiteboard. He then places the pen on an area of the surface provided with a part of the position coding pattern dedicated to a specific color/line width. As a result the pen will send an associated instruction or parameter to the computer, which will process the pen stroke as having the specified color/line width. It should be noted that the above-described control areas may be used both in the marker mode and in the non-marking mode.

An exemplary digital pen may be configured to operate on a position-coding pattern developed by Anoto AB. The position-coding pattern may be configured and decoded as described in e.g. US 7,110,609, US 7,283,676, US 7,050,653 US 6,667,695, US 6,732,927, US 6,929,183, US 7,145,556, US 6,674,427, US 7,248,250, US 7,281,668, US 7,172,131, US 2007/0064818, US 7,195,166, US2005/0199729 and references therein.

Examples of other absolute position-coding patterns that may be used on a surface for enabling digital recording of pen strokes may be found in e.g. US 5,852,434; WO2006/065045; WO 99/50787; US 5,661,506; US 2004/0085287; US 5,442,147; and US 2005/0173544.

Independently of the position-coding pattern used, the processing module may process image data to calculate positions encoded by the imaged parts of the coding pattern. The resulting sequence of temporally coherent positions forms a digital representation of a pen stroke.

The digital pen need not necessarily operate on a surface provided with an absolute position-coding pattern. The surface and the pen may for instance be provided by means for determining absolute reference positions for the pen using triangulation or time-of-flight. techniques. The digital pen may then determine its position between the reference points by relative positioning techniques. The pen may for instance match the content of successively captured images in order to determine successive relative positions.

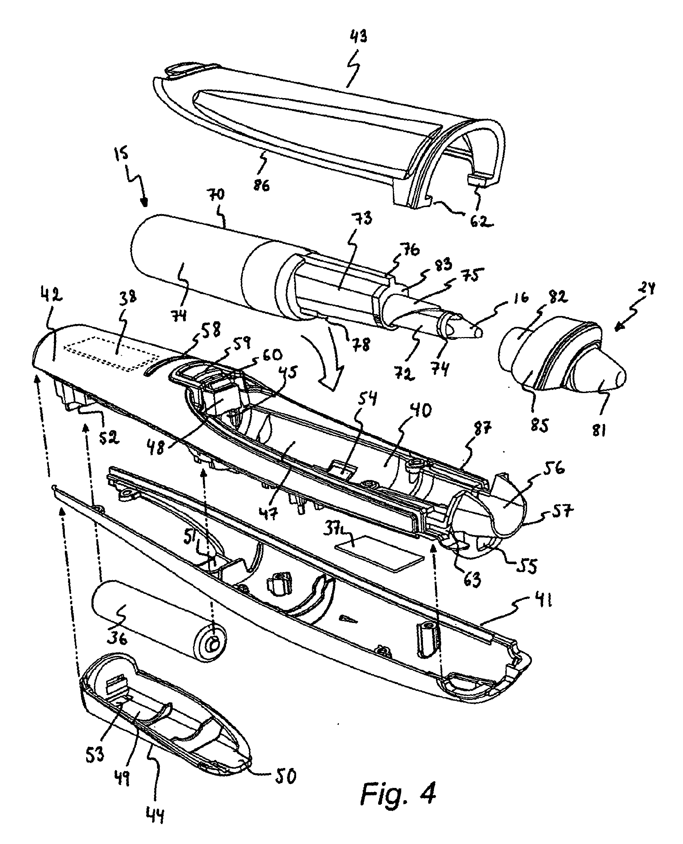

An exemplary digital pen will now be described with reference to Figs 4-6.

Fig. 4 shows an exploded view of the exemplary digital pen with its main mechanical components: a casing 14, an ink cartridge 15 and a cap 24. The exploded view also includes a battery 36 as power supply for the digital pen and it schematically indicates the presence of two PCBs 37, 38. The first PCB 37 may carry an image sensor and an optics module (not shown) and the second PCB 38 may carry a Bluetooth communications circuit (not shown).

The casing 14 generally includes a carrier 40, a bottom part 41, a top part 42, a cartridge lid 43 and a battery lid 44. The carrier and the top part are shown in an assembled state. The carrier 40 extends through the entire digital pen from the writing end to the non-writing end. The operational parts of the digital pen, such as the two PCBs 37, 38, a pen-down detector 45 and the ink cartridge 15, are all held by the carrier, resulting in short tolerance chains. More particularly, both the first and the second PCB 37, 38 are fixed to the carrier 40, for instance screwed thereon. The ink cartridge 15 is held in a cartridge compartment 47 defined by the carrier 40 together with the top part 42 and the cartridge lid 43. The longitudinal and the rotational position of the cartridge are controlled by guiding elements in the carrier and the cartridge lid. The contact sensor 45 is mounted in one short end of the cartridge compartment in a recess that is provided with a top cover 48 to protect it from wear when the ink cartridge is changed. The battery 36 is held in a battery compartment 49 defined by the carrier together with the bottom part and the battery lid.

The battery lid 44 has a tongue 50, which is held in a recess 51 in the bottom part when the lid is closed and the carrier carries a spring-biased locking plate 52 which extends through an opening 53 in the bottom of the battery lid when the battery lid is closed, but which can be pushed back by a user to open the battery lid. The battery lid 44 is provided with retaining elements (not shown) in its rear end so that cap 24 can be retained on the non-writing end of the pen when the pen is used in the marker mode.

The bottom part 41 is intended to be fixed by screws to the carrier 40. It defines together with the carrier a space for the first PCB 37 under the cartridge compartment 47. Test points on the first PCB are accessible through a hatch 54 in the bottom of the cartridge compartment. The camera system on the first PCB captures images through a window 55 at the writing end of the casing.

The carrier is formed as a cradle 56 at the writing end. The cradle projects ahead of the window 55 for the camera system. Together with the top part 42 it defines a second opening 57 at the writing end of the digital pen through which the writing tip of the ink cartridge protrudes when the ink cartridge is placed in the cartridge compartment.

The top part 42 is fixed by screws to the carrier. Together with the carrier 40 it defines a space for the second PCB 38 above the battery compartment 49. A multi-coloured LED (not shown) on the second PCB is visible through a transparent slit 58 in the top part such that user feed-back can be provided via the LED. The top part also includes a resilient button 59 by which the cartridge lid 43 can be locked and unlocked. The front part of the button 59 constitutes a retaining element 60, which is spring-biased into a groove (not shown) in the underside of the cartridge lid 43 when the lid is placed on the top part.

The cartridge lid has two hooks 62 at its front end. They are intended to be received in a respective groove 63 in the casing at each side of the cradle 56 when the cartridge lid is placed on the digital pen. The rear part of the cartridge lid is provided with retaining elements which cooperate with corresponding retaining elements on the top part to retain the lid on the digital pen.

The ink cartridge 15 has a shell 70, which holds an ink supply and writing tip 16 in the form a felt point. The shell has a substantially cylindrical front part 72, in which the felt point is placed so that it protrudes therefrom, a substantially cylindrical middle part 73 and a substantially cylindrical rear part 74. The front part, the middle part and the rear part have different cross-sectional areas. The front part is provided with a retaining element in the form of a ring 74 around its circumference. The ring 74 is intended to cooperate with a ring inside the cap to retain the cap on the ink cartridge. The front part is furthermore provided with a guiding element in the form of a tapering guide area 75 on the upper side of the front part. This guide area is intended to cooperate with a corresponding recess inside the cap to guide the cap to a predetermined rotational position on the cartridge. These guiding elements also simplify the removal of the cap. If the cap is turned slightly, it will be forced away from the writing tip by the interaction between the guiding elements of the cartridge and the cap.

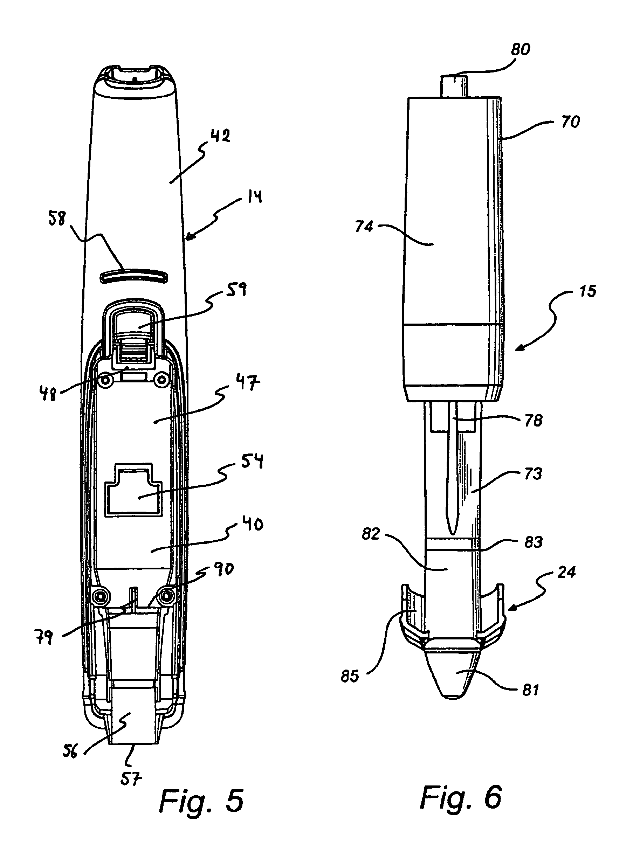

The middle part has a longitudinal guiding ridge 76 on its upper side, which is arranged to abut against a ridge (not shown) inside the cartridge lid in order to prevent the cartridge from tilting inside the cartridge compartment. Also, the middle part 73 has a groove 78 on its under side, which is intended to cooperate with a guiding ridge 79 (see Fig. 5) in the bottom of the cartridge compartment 47 to control the rotational position of the ink cartridge 15 in the casing and thereby the rotational position of the cap 24 in relation to the casing. The middle part has a smaller cross-sectional area than the rear part. In this way, the first PCB with the camera system can be placed closer to the longitudinal axis of the ink cartridge so that the camera system can capture images close to the writing tip. Also the pen can be made thinner in this way. The upper side of guiding ridge 76 is aligned with the upper side of the rear part. In this way the height of the ridge inside the cartridge lid can be kept small so that it will allow the cartridge lid to be slipped over the cap when removed.

The rear part has a protruding knob 80 (see Fig. 6), which is intended to act on the pen-down detector 45 when the ink cartridge is placed in the cartridge compartment and the pen is operated on a surface.

The cap 24 comprises a conical part 81, which is intended to cover the writing tip, and a cylindrical part 82, which is intended to be locked on the front part of the ink cartridge by means of the above-mentioned inside ring which slips over the outside ring 74 on the front part of the cartridge to retain the cap on the cartridge. The cylindrical part 82 of the cap 24 may abut against the short end 83 of the middle cartridge part 73 when the cap is placed on the cartridge. Also, the cartridge is provided with a superstructure in the form of a shield 85 which is designed so that it can extend around the cradle 56 of the carrier when the cap is mounted on the ink cartridge. The shield 85 is provided on the upper side of the cap. It extends around approximately half of the perimeter of the cap so as to not functionally obstruct the field of view of the camera system. With this shield the diameter of the cap is increased so that the maximum measure in a plane transverse to the longitudinal axis of the cylindrical part is at least 16 mm, thereby preventing choking hazards.

The ink cartridge of the exemplary digital pen shown in Fig. 4 can be removed from the digital pen and replaced by another ink cartridge, e.g. when the ink reservoir is empty or when a user wishes to use an ink cartridge with ink of another color.

When the ink cartridge is to be replaced, the cap 24 is placed on the writing tip 16. The user then presses the resilient button 59 on the top part 42 so that the retaining element 60 is released from the groove in the cartridge lid 43. At the same time the user pushes the lid 43 towards the writing end so that the hooks 62 in the front end are released from the grooves 63 in the carrier and the lid can be removed.

When the cartridge lid 43 has been removed, the top wall (upper side) of the cartridge compartment 47 is open all the way to the open short end (opening 57) at the writing end. This implies that the ink cartridge in the cartridge compartment with the cap present on the writing tip can easily be lifted and removed from the digital pen. Another ink cartridge 15 with a cap 24 present on the writing tip can then be inserted in the cartridge compartment from above with the longitudinal axis approximately parallel with the longitudinal axis of the cartridge compartment, as schematically shown in Fig. 4.

When the new ink cartridge 15 has been placed in the cartridge compartment 47, the cartridge lid 43 can be put back on the casing by sliding the cartridge lid onto the casing in a longitudinal movement with edges 86 of the cartridge lid 43 sliding against the edges 87 of the top part of the casing until the retaining elements at the rear end of the cartridge lid engages into the retaining elements of the casing and the hooks 62 at the front end engages into the grooves 63 of the carrier. To enable the lid to be put on in this way and to be removed as described above, the front end thereof has a larger cross section than the cap so that the front end can be slipped over the cap.

As is evident from the above, the ink cartridge can both be inserted into the digital pen and removed therefrom with the cap held on the cartridge, thereby preventing unwanted ink smear in connection with change of ink cartridge.

To allow for pen-down detection by means of a pen-down detector at the short end of the cartridge compartment furthest from the writing end, the ink cartridge is slightly movable in the longitudinal direction when placed in the cartridge compartment. In the exemplary digital pen of Fig. 4, the ink cartridge's movement towards the writing end is limited by stop 90 (Fig. 5) in the bottom of cartridge compartment 47 against which middle part 73 of the ink cartridge will abut. The movement of the ink cartridge towards the non-writing end is limited by pen-down detector 45. Any noise from the movement of the ink cartridge inside the compartment may be reduced by covering the stop with some kind of elastic material. To allow for pen-down detection also in the non-marking mode, the ink cartridge is movable in the cartridge compartment also with the cap placed on the writing tip. This is made possible by the fact that the cap is fixed only on the cartridge and moveable together with the cartridge without its longitudinal movement being blocked by any part of the casing. The cap and the cartridge may be movable in the casing as one unit without any relative movement between the cap and the cartridge.

In order for the cap not to obstruct the field of view of the camera, the rotational position of the cap in relation to the casing may need to be controlled. As is evident from the above, this control is achieved in that the cap and the cartridge have cooperating guiding elements that controls the rotational position of the cap on the cartridge and in that the cartridge and the casing have cooperating guiding elements that control the rotational position of the cartridge in relation to the casing and thereby of the cap in relation to the casing. In an alternative embodiment, the rotational position of the cap is controlled directly by the casing. The cap and the cradle could for instance be designed so that the cap is held inside the cradle but so that the cap fits into the cradle only in a predetermined rotational position which does not functionally obstruct the camera system. In this embodiment, the cap could be placed in any rotational position on the ink cartridge and the ink cartridge need not be rotationally controlled in the cartridge compartment. To allow for pen-down detection the cap need be movable inside the cradle in this case.

Fig 7 shows a different design of the cap. In this case, the superstructure is symmetrical so that the cap can be placed in two different rotational positions on the cartridge or on/in the casing without functionally obstructing the field of view of the camera system.

An alternative solution to the above-described solution of using a cap in the non-marking mode could be to replace the ink cartridge by a stylus (a dummy cartridge without ink) in the non-marking mode. In such a solution, there may still be a cap on the ink cartridge to prevent ink smearing when the digital pen is not in use and when the ink cartridge is replaced. The design of the cap may be different from the designs shown above, since the cap may cover the window of the camera system. The cap may be fastened on the ink cartridge so that the ink cartridge may be removed and inserted with the cap present on the writing tip. For that purpose, the casing of the digital pen may define a cartridge compartment which has a lid and an opening for the writing tip at one short end of the cartridge compartment, wherein the lid forms one wall of the compartment and the corresponding wall of the opening for the writing tip, so that the ink cartridge may be inserted and removed in a movement with the longitudinal axis of the ink cartridge substantially parallel to the longitudinal axis of the cartridge compartment.

Above it has been indicated that a user can indicate a change from the marker mode to the non-marking mode or vice versa by placing the digital pen on a dedicated part of the position-coding pattern. In this connection it should be observed that the pen does not need to know if it operates in the marker mode or the non-marking mode as long as it only records pen strokes in both modes. The device to which position information is sent from the digital pen may however need to know the mode of the pen in order to properly process the position information. As an alternative to the use of a dedicated part of the position-coding pattern, the digital pen may include different solutions for detecting whether the cap is on or off. Such solutions may for instance include a contact or proximity sensor placed in the casing or on the ink cartridge close to the writing end for detecting the presence of the cap on the writing tip, image processing to detect the presence of a part of the cap at the border of images captured by the camera system or to detect the distance to the surface, a cap detector at the rear end of the digital pen for detecting the presence of the cap when the pen is used in the marker mode, and measurement of radiation intensity if a transparent cap is used. If a system includes one surface that is exclusively used by the pen in marking mode and another surface that is exclusively used by the pen in the non-marking mode, the pen can determine the current mode from the different position-coding patterns provided on the surfaces.

The digital pen may have a hovering mode, in which the position of the pen is determined also when the pen is moved at a small distance from the surface or in contact with the surface but with a very light pressure that does not trigger the pen-down detector. This hovering mode can be used for emulating an "ordinary" mouse movement, i.e. without any mouse button pressed down. Hovering may be achieved by triggering the camera to capture images all the time, i.e. not only between a pen down and a pen up. The depth of field of the camera system may limit the distance from the surface at which hovering is possible.

## Claims

1. A digital pen comprising
a casing (14);
a replaceable cartridge (15) with a writing tip (16) for marking a surface;
a camera system (18) for capturing images of the surface in order to digitally record pen strokes formed on the surface,
a detachable cap (24) arranged to be selectively placed at a writing end of the digital pen
wherein the writing tip (16) is arranged to protrude from the casing (14) though an opening thereof when the ink cartridge is loaded in the casing; the digital pen is arranged to be operable as a non-marking pen with the cap (24) placed at the writing end or as a marker pen without the cap placed at the writing end; and the digital pen is configured to digitally record pen strokes both when operated as a non-marking pen and as a marker pen.

2. The digital pen of claim 1, wherein the cap (24) is designed to cover the writing tip (16) without functionally obstructing a field of view of the camera system when the cap is placed at the writing end of the digital pen.

3. The digital pen of claim 1 or 2, wherein the cap (24) is designed to be held on the cartridge (15).

4. The digital pen of claim 3, wherein the cap (24) and the cartridge (15) are provided with cooperating retaining elements (74) to retain the cap on the cartridge.

5. The digital pen as claimed in any one of claims 1-4, wherein the pen comprises a pen-down detector (45) and wherein the cartridge (15) is longitudinally movable in the casing to trigger the pen-down-detector both with and without the cap (24) placed at the writing end of the digital pen.

6. The digital pen as claimed in any one of claims 1-5, wherein the cartridge (15) and the cap (24) have cooperating guiding elements (75) to control the rotational position of the cap in relation to the cartridge.

7. The digital pen as claimed in any one of claims 1-6, wherein the cartridge ( 15) and the casing (14) have cooperating guiding elements (78, 79) to control the rotational position of the cartridge in relation to the casing.

8. The digital pen as claimed in any one of claims 1-7, wherein the cap (24) comprises a superstructure (85) which enlarges the diameter of the cap.

9. The digital pen as claimed in claim 8, wherein the superstructure (85) is asymmetric in a plane transverse to the longitudinal axis of the cap.

10. The digital pen as claimed in any one of claims 1-9, wherein the casing defines a cartridge compartment (47), which has a lid (43) and an opening (57) for the writing tip (16) at one short end of the cartridge compartment, wherein the lid forms one wall of the compartment and the corresponding wall of the opening for the writing tip.

11. The digital pen as claimed in claim 10, wherein a PCB (37) is accessible for testing through the bottom of the cartridge compartment (47).

12. The digital pen as claimed in claim 10, wherein the cross-section of the removable lid (43) at the end closest to the writing end of the digital pen is larger than that of the cap (24).

13. The digital pen as claimed in any one of claims 1-12, wherein the surface is provided with a position-coding pattern and wherein the digital pen further comprises a processing module (20) for decoding position information from the position-coding pattern represented in the images captured by the camera system (18), wherein the digitally recorded pen strokes are constituted by said position information.

## Patentansprüche

1. Digitaler Stift, der Folgendes umfasst:
ein Gehäuse (14);
eine austauschbare Tintenpatrone (15) mit einer Schreibspitze (16), um eine Oberfläche zu markieren;
ein Kamerasystem (18), um Bilder der Oberfläche aufzunehmen, um auf der Oberfläche gebildete Stiftstriche digital aufzuzeichnen, und
eine abnehmbare Kappe (24), die dazu ausgelegt ist, wahlweise auf einem Schreibende des digitalen Stifts angeordnet zu werden, wobei
die Schreibspitze (16) dazu ausgelegt ist, von dem Gehäuse (14) durch eine Öffnung hiervon vorzustehen, wenn die Tintenpatrone in das Gehäuse geladen ist;
der digitale Stift dazu ausgelegt ist, als ein Nichtmarkierungsstift, wenn die Kappe (24) auf dem Schreibende angeordnet ist, oder als ein Markierungsstift, wenn die Kappe nicht auf dem Schreibende angeordnet ist, betätigt zu werden; und
der digitale Stift konfiguriert ist, um Stiftstriche dann, wenn er als Nichtmarkierungsstift betätigt wird, und dann, wenn er als Markierungsstift betätigt wird, digital aufzuzeichnen.

2. Digitaler Stift nach Anspruch 1, wobei die Kappe (24) entworfen ist, um die Schreibspitze (16) abzudecken, ohne ein Gesichtsfeld des Kamerasystems funktionstechnisch zu behindern, wenn die Kappe auf dem Schreibende des digitalen Stifts angeordnet ist.

3. Digitaler Stift nach Anspruch 1 oder 2, wobei die Kappe (24) entworfen ist, um auf der Patrone (15) gehalten zu werden.

4. Digitaler Stift nach Anspruch 3, wobei die Kappe (24) und die Patrone (15) mit zusammenwirkenden Haltemitteln (74) versehen ist, um die Kappe auf der Patrone zu halten.

5. Digitaler Stift nach einem der Ansprüche 1-4, wobei der Stift einen Detektor (45) für Stift/Flächen-Kontakt umfasst und wobei die Patrone (15) in dem Gehäuse in Längsrichtung beweglich ist, um den Detektor für Stift/Flächen-Kontakt sowohl mit als auch ohne auf dem Schreibende des digitalen Stifts angeordneter Kappe (24) auszulösen.

6. Digitaler Stift nach einem der Ansprüche 1-5, wobei die Patrone (15) und die Kappe (24) zusammenwirkende Führungselemente (75) haben, um die Drehposition der Kappe in Bezug auf die Patrone zu steuern.

7. Digitaler Stift nach einem der Ansprüche 1-6, wobei die Patrone (15) und das Gehäuse (14) zusammenwirkende Führungselemente (78, 79) besitzen, um die Drehposition der Patrone in Bezug auf das Gehäuse zu steuern.

8. Digitaler Stift nach einem der Ansprüche 1-7, wobei die Kappe (24) eine Superstruktur (85) umfasst, die den Durchmesser der Kappe vergrößert.

9. Digitaler Stift nach Anspruch 8, wobei die Superstruktur (85) in einer Ebene quer zu der Längsachse der Kappe asymmetrisch ist.

10. Digitaler Stift nach einem der Ansprüche 1-9, wobei das Gehäuse ein Patronenfach (47) definiert, das einen Deckel (43) und eine Öffnung (57) für die Schreibspitze (16) an einem kurzen Ende des Patronenfachs besitzt, wobei der Deckel eine Wand des Fachs und die entsprechende Wand der Öffnung für die Schreibspitze bildet.

11. Digitaler Stift nach Anspruch 10, wobei durch den Boden des Patronenfachs (47) eine PCB (37) zu Testzwecken zugänglich ist.

12. Digitaler Stift nach Anspruch 10, wobei der Querschnitt des entfernbaren Deckels (43) an dem am nächsten bei dem Schreibende des digitalen Stifts befindlichen Ende größer ist als jener der Kappe (24).

13. Digitaler Stift nach einem der Ansprüche 1-12, wobei die Oberfläche mit einem Positionscodierungsmuster versehen ist und wobei der digitale Stift ferner ein Verarbeitungsmodul (20) umfasst, um Positionsinformationen von dem Positionscodierungsmuster, das in den durch das Kamerasystem (18) aufgenommenen Bildern dargestellt wird, zu decodieren, wobei die digital aufgezeichneten Stiftstriche durch diese Positionsinformationen gebildet sind.

## Revendications

1. Stylo numérique comprenant :
une enveloppe (14) ;
une cartouche d'encre remplaçable (15) avec une pointe à écrire (16) pour marquer une surface ;
un système photographique (18) pour capturer des images de la surface afin d'enregistrer numériquement les traits de stylo formés sur la surface,
un capuchon détachable (24) agencé de manière à être placé sélectivement à une extrémité d'écriture du stylo numérique
dans lequel
la pointe à écriture (16) est agencée de manière à faire saillie depuis l'enveloppe (14) à travers une ouverture de celui-ci lorsque la cartouche d'encre est chargée dans l'enveloppe ;
le stylo numérique est agencé de manière à être utilisable comme stylo non marqueur avec le capuchon (24) placé à l'extrémité d'écriture ou comme stylo marqueur sans le capuchon placé à l'extrémité d'écriture ;
et le stylo numérique est configuré de manière à enregistrer numériquement les traits de stylo lorsqu'il est utilisé comme stylo non marqueur et comme stylo marqueur.

2. Stylo numérique selon la revendication 1, dans lequel le capuchon (24) est conçu de façon à couvrir la pointe à écriture (16) sans obstruer fonctionnellement un champ de vision du système photographique lorsque le capuchon est placé à l'extrémité d'écriture du stylo numérique.

3. Stylo numérique selon la revendication 1 ou 2, dans lequel le capuchon (24) est conçu de façon à être maintenu sur la cartouche (15).

4. Stylo numérique selon la revendication 3, dans lequel le capuchon (24) et la cartouche (15) sont pourvus d'éléments de retenue coopérants (74) pour retenir le capuchon sur la cartouche.

5. Stylo numérique selon l'une quelconque des revendications 1 à 4, ce stylo comprenant un détecteur de stylo abaissé (45) et la cartouche (15) étant mobile longitudinalement dans l'enveloppe pour déclencher le détecteur de stylo abaissé, que le capuchon (24) placé ou pas à l'extrémité d'écriture du stylo numérique.

6. Stylo numérique selon l'une quelconque des revendications 1 à 5, dans lequel la cartouche (15) et le capuchon (24) ont des éléments de guidage coopérants (75) pour contrôler la position de rotation du capuchon par rapport à la cartouche.

7. Stylo numérique selon l'une quelconque des revendications 1 à 6, dans lequel la cartouche (15) et l'enveloppe (14) ont des éléments de guidage coopérants (78, 79) pour contrôler la position de rotation de la cartouche par rapport à l'enveloppe.

8. Stylo numérique selon l'une quelconque des revendications 1 à 7, dans lequel le capuchon (24) comprend une superstructure (85) qui agrandit le diamètre du capuchon.

9. Stylo numérique selon la revendication 8, dans lequel la superstructure (85) est asymétrique dans un plan transversal à l'axe longitudinal du capuchon.

10. Stylo numérique selon l'une quelconque des revendications 1 à 9, dans lequel l'enveloppe définit un compartiment pour cartouche (47), qui a un couvercle (43) et une ouverture (57) pour la pointe à écriture (16) à une extrémité courte du compartiment pour cartouche, dans lequel le couvercle forme une paroi du compartiment et la paroi correspondante de l'ouverture pour la pointe à écrire.

11. Stylo numérique selon la revendication 10, dans lequel une carte de circuit imprimé (37) est accessible à travers le fond du compartiment pour cartouche (47) pour être soumise à des essais.

12. Stylo numérique selon la revendication 10, dans lequel la coupe transversale du couvercle amovible (43) à l'extrémité la plus proche de l'extrémité d'écriture du stylo numérique est plus grande que celle du capuchon (24).

13. Stylo numérique selon l'une quelconque des revendications 1 à 12, dans lequel la surface est pourvue d'un motif de codage de position et dans lequel le stylo numérique comprend en outre un module de traitement (20) pour décoder une information de position à partir du motif de codage de position représenté dans les images capturées par le système photographique (18), dans lequel les traits de stylo enregistrés numériquement sont constitués par ladite information de position.
